Europäisches Patentamt

European Patent Office

Office européen des brevets

(19)

(11) Veröffentlichungsnummer: **0 075 209**
**A2**

(12) # EUROPÄISCHE PATENTANMELDUNG

(21) Anmeldenummer: **82108331.8**

(22) Anmeldetag: **09.09.82**

(51) Int. Cl.³: **F 01 D 17/14,** F 16 K 1/38

(30) Priorität: **22.09.81 DE 3137654**

(43) Veröffentlichungstag der Anmeldung: **30.03.83**
**Patentblatt 83/13**

(84) Benannte Vertragsstaaten: **CH FR GB LI**

(71) Anmelder: **KRAFTWERK UNION AKTIENGESELLSCHAFT, c/o SIEMENS AG Postfach 261, D-8000 München 22 (DE)**

(72) Erfinder: **von Schwerdtner, Otto, Dipl.-Ing., Oemberg 27, D-4330 Mülheim (DE)**
Erfinder: **Judith, Hans, Dipl.-Ing., Föhrenkamp 28, D-4330 Mülheim (DE)**

(74) Vertreter: **Mehl, Ernst, Dipl.-Ing. et al, Postfach 22 01 76, D-8000 München 22 (DE)**

(54) **Stellventil, insbesondere zur Steuerung und Regelung von Dampfturbinen.**

(57) Stellventil, insbesondere zur Steuerung und Regelung von Dampfturbinen, mit einem seitlich in das Ventilgehäuse (1) einmündenden Eintrittsstutzen (2), einem innerhalb des Ventilgehäuses (1) in einer Ventilführung (7) verschiebbaren Ventilkörper, einem in dem Ventilgehäuse (1) angeordneten Ventilsitz (4) und einem dem Ventilsitz (4) nachgeschalteten Diffusor (5). In dem Ringraum zwischen Ventilgehäuse (1) und Ventilführung (7) ist mindestens eine Strömungsleitschiene vorgesehen, welche in bezug auf eine durch den Eintrittsstutzen (2) und die Längsachse (L) des Ventilgehäuses (1) gehende Symmetrieebene einseitig versetzt angeordnet ist. Vorzugsweise nimmt die als Gehäuserippe (9) ausgebildete Strömungsleitschiene einen schraubenförmig gewundenen Verlauf. Durch die Strömungsleitschiene wird der Strömung (S) ein Drall (D) aufgezwungen, welcher durch die von ihm ausgehende Zentrifugalwirkung eine Ablösung der Strömung (S) von der Diffusorwand verhindert. Die den Ventilkörper zu Schwingungen anregenden Wechselkräfte werden hierdurch minimiert.

KRAFTWERK UNION AKTIENGESELLSCHAFT     Unser Zeichen
Mülheim a. d. Ruhr                     VPA 81 P 9369 E

0075209

Stellventil, insbesondere zur Steuerung und Regelung von Dampfturbinen

Die Erfindung bezieht sich auf ein Stellventil, insbesondere zur Steuerung und Regelung von Dampfturbinen, gemäß dem Oberbegriff des Patentanspruchs 1.

Derartige Stellventile, die beispielsweise aus der Siemens-Zeitschrift 41 (1967), Beiheft "Dampfturbinen großer Leistung", Seiten 75 und 76 bekannt sind, sollen einerseits durch Verändern der Hubstellung des Ventilkörpers eine gewünschte Drosselcharakteristik gewährleisten und andererseits in voll geöffnetem, d. h. in ausgesteuertem Zustand möglichst geringe Gefälleverluste verursachen. Darüber hinaus sollen im Hinblick auf Grenzen der Baumaße und der Leistung der zugehörigen Stellantriebe die Verstellkräfte klein gehalten werden. Bei den im Dampfturbinenbau zumeist verwendeten Einsitzventilen werden die Verstellkräfte durch die Wahl eines relativ geringen Durchmessers des Ventilkörpers vermindert. Im engsten Querschnitt hinter dem Ventilsitz ergeben sich damit schon im voll geöffneten Zustand des Stellventils hohe Strömungsgeschwindigkeiten. Um die Gefälleverluste in der nachfolgenden Rohrleitung klein zu halten, wird dann die Strömungsgeschwindigkeit in dem hinter dem Ventilsitz angeordneten Diffusor verlustarm verlangsamt. Bei diesem Querschnittsverlauf des Stellventils, der als konvergent-divergenter Kanal aufgefaßt werden kann, ergeben sich tiefste Drucke in dem engsten Querschnitt gefolgt von einem Druckanstieg längs des Diffusors.

Wird zu Steuerungzwecken die Strömung gedrosselt und der Ventilkörper hierzu in Richtung des Ventilsitzes verschoben, so kommt es im Diffusor in mit der Schließbewegung

Klk 2 Fl/16.9.1981

0075209

des Ventilkörpers zunehmendem Maße zu Strömungsablösungen.
Die Übergeschwindigkeiten der Strömung werden dabei durch
Verwirbeln verlangsamt. Bei stärkerer Drosselung werden
zunehmend Überschallgeschwindigkeiten der Strömung hinter
dem Ventilsitz erzeugt, welche durch Verdichtungsstöße
abgebaut werden. Beide Formen der Strömungsverlangsamung
bzw. Verlusterzeugung durch Verwirbeln oder durch Verdichtungsstöße bewirken jedoch einen stark instationären
Strömungsverlauf mit ausgeprägter Grobturbulenz, mit Pulsieren und mit Hin- und Herschwanken der hinter dem Ventilsitz zunächst als Freistrahl verlaufenden Strömung.
Die hierdurch erzeugten Druckschwankungen wirken dann als
unerwünschte Schwingungsanregung auf den Ventilkörper.

Besonders starke Schwankungen können auch schon bei relativ schwacher Drosselung auftreten. Es ist für eine Diffusorströmung charakteristisch, daß der Beginn der Strömungsablösung instationär verläuft, da es zwischen noch
anliegender und schon abgelöster Strömung zu stochastischem Wechsel kommt. Die hierdurch ausgelösten Zusammenbrüche des Druckanstieges im Diffusor und die davon ausgehenden starken Druckstöße wirken ebenfalls als Schwingungsanregungen auf den Ventilkörper.

Der Erfindung liegt daher die Aufgabe zugrunde, ein Stellventil zu schaffen, bei welchem die den Ventilkörper zu
Schwingungen anregenden Wechselkräfte minimiert werden.

Diese Aufgabe wird erfindungsgemäß durch die im kennzeichnenden Teil des Patentanspruchs 1 angegebenen Merkmale gelöst.

Der Erfindung liegt die Erkenntnis zugrunde, daß die
Strömung hinter der Drosselstelle und im Diffusor durch
einen Drall stabilisiert werden kann und daß ein derartiger Drall der Strömung durch eine in dem Ringraum
zwischen Ventilgehäuse und Ventilführung vorgesehene Strömungsleitschiene aufgezwungen werden kann, sofern diese Strömungsleitschiene in bezug auf eine durch den Eintrittsstutzen und die Längsachse des Ventilgehäuses gehende Symmetrieebene einseitig versetzt angeordnet ist. Durch die von dem Drall ausgehende Zentrifugalwirkung wird die Strömung nach außen gezwungen und hierdurch eine Ablösung der Strömung von der Diffusorwand vermieden. Die Stärke des Dralles, die durch die Bemessung der Strömungsleitschiene und insbesondere durch den Versatz der Strömungsleitschiene gegenüber der genannten Symmetrieebene beeinflußt werden kann, ist hierbei zur Vermeidung zusätzlicher Gefälleverluste begrenzt.

Bei einer bevorzugten Ausführungsform des erfindungsgemäßen Stellventils ist die Strömungsleitschiene durch eine aus der Innenwandung des Ventilgehäuses hervortretende Gehäuserippe gebildet. Eine derartige Gehäuserippe ist aus Festigkeitsgründen einer geschweißten Konstruktion vorzuziehen.

Bei einer weiteren bevorzugten Ausgestaltung der Erfindung ist zur Homogenisierung der Drallströmung vorgesehen, daß die Strömungsleitschiene zur Längsachse des Ventilgehäuses geneigt ist. Zweckmäßigerweise liegen dabei die inneren Endpunkte der Strömungsleitschiene auf einer um die Längsachse des Ventilgehäuses geführten Schraubenlinie. Mit Rücksicht auf unterschiedliche Wärmedehnungen verläuft die Schraubenlinie dabei im Abstand zur Ventilführung.

Im folgenden sind Aufbau und Wirkungsweise eines Ausführungsbeispiels der Erfindung anhand der Zeichnung näher erläutert.
Dabei zeigt:

Fig. 1 einen teilweisen Längsschnitt durch das Ventilgehäuse eines Stellventils für Dampfturbinen,

Fig. 2 eine Seitenansicht des in Fig. 1 dargestellten

0075209

Stellventils,

Fig. 3 einen Schnitt gemäß der Linie III-III der Fig. 2,

Fig. 4 einen Schnitt gemäß der Linie IV-IV der Fig. 2 und

Fig. 5 einen Schnitt gemäß der Linie V-V der Fig. 4.

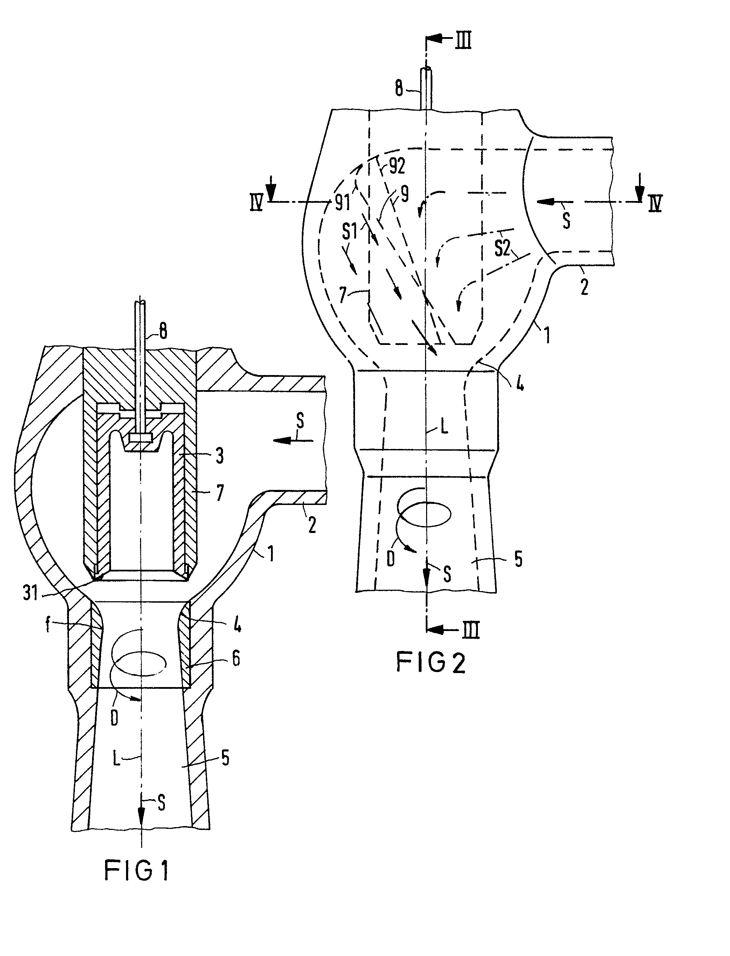

Fig. 1 zeigt einen Längsschnitt durch einen Teil des Ventilgehäuses 1 eines Stellventils. Die durch Pfeile S angedeutete Dampfströmung tritt durch einen seitlichen Eintrittsstutzen 2 in das Ventilgehäuse 1 ein, durchströmt einen zwischen der Kegellippe 31 eines Ventilkörpers 3 und einem Ventilsitz 4 gebildeten Ringquerschnitt und tritt dann nach unten aus dem Ventilgehäuse 1 aus, wobei der Austrittsbereich als Diffusor 5 ausgebildet ist.

Der Querschnittsverlauf des Stellventils kann dabei als konvergent-divergenter Kanal aufgefaßt werden, wobei der Ventilsitz 4 in dem konvergenten Kanalteil vor dem engsten Querschnitt f liegt und wobei der divergente Kanalteil durch den Diffusor 5 gebildet wird. Dabei ist die Kontur des konvergent - divergenten Kanals im Bereich des Ventilsitzes 4, des engsten Querschnittes f und des Anfangsbereichs des divergenten Kanalteils bzw. Diffusors 5 durch eine aus verschleißfestem Material bestehende und in das Ventilgehäuse eingesetzte Ventilsitzbuchse 6 gebildet.

Der Ventilkörper 3 ist als Kolben ausgebildet, und innerhalb einer als Zylinder ausgebildeten und im Ventilgehäuse 1 fest angeordneten Ventilführung 7 in axialer Richtung geführt. Die Hubstellung des Ventilkörpers 3, welche die Drosselung der Dampfströmung S bestimmt, wird dabei in Richtung der Längsachse L des Ventilgehäuses über eine formschlüssig dem Ventilkörper 3 verbundene Ventilspindel 8 von einem in der Zeichnung nicht dargestellten Stellantrieb eingestellt.

Um nun die den Ventilkörper 3 zu Schwingungen anregenden Wechselkräfte zu minimieren, soll die Dampfströmung S hinter dem Ventilsitz 4 und im Diffusor 5 stabilisiert werden. Dies gelingt mit Hilfe eines der Dampfströmung S aufgezwungenen Dralles, welcher durch einen schraubenlinienförmigen Pfeil D angedeutet ist. Der Drall D verhindert durch die auf die Dampfströmung S ausgeübte Zentrifugalwirkung eine Ablösung von der Wandung des Diffusors 5.

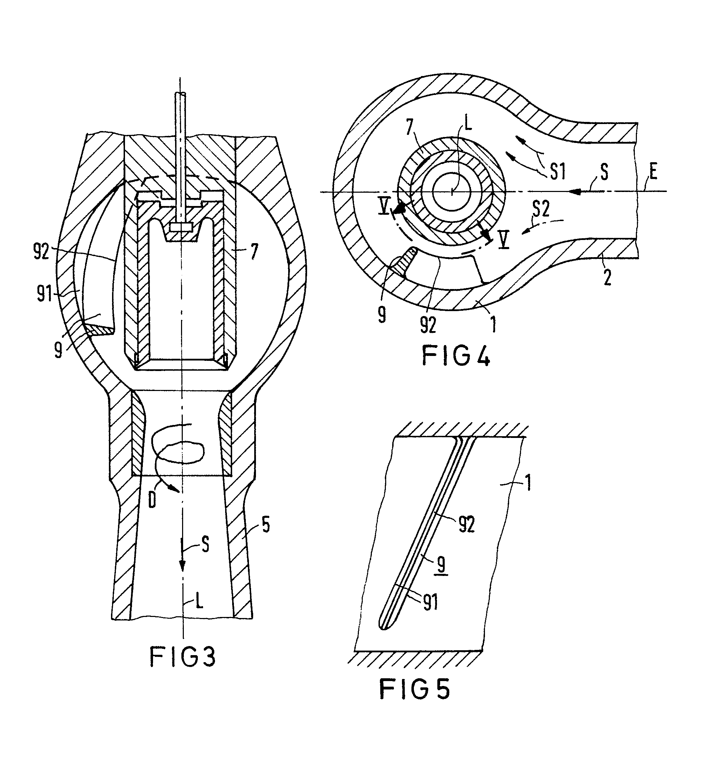

Der Drall D wird der Dampfströmung S mit Hilfe einer Gehäuserippe 9 aufgezwungen, deren Verlauf innerhalb des Ventilgehäuses 1 aus den Fig. 2 bis 5 hervorgeht. Zunächst ist in der Seitenansicht der Fig. 2 zu erkennen, daß die Gehäuserippe 9 im oberen Bereich des zwischen dem Ventilgehäuse 1 und der Ventilführung 7 gebildeten Ringraumes beginnt, schräg geneigt zur Längsachse L des Ventilgehäuses 1 nach unten verläuft und in Höhe der Unterkante der Ventilführung 7 endet. Dieser Verlauf der Gehäuserippe 9 ist durch eine Fußlinie 91 und eine Kopflinie 92 dargestellt. In dem Schnittbild der Fig. 3 ist weiterhin zu erkennen, daß die aus der Innenwandung des Ventilgehäuses 1 hervortretende Gehäuserippe 9 einen schraubenlinienförmig gewundenen Verlauf nimmt. Dabei ist die Schnittfläche der an das Ventilgehäuse 1 angegossenen Gehäuserippe 9 durch eine Schraffur hervorgehoben. Der in Fig. 4 dargestellte Querschnitt zeigt zusätzlich, daß die Gehäuserippe 9 in radialer Richtung aus der Innenwandung des Ventilgehäuses 1 hervortritt und daß ihre Kopflinie 92 längs ihres schräg nach unten führenden Verlaufs stets den gleichen Abstand von der Ventilführung 7 aufweist. Letzteres bedeutet, daß die Kopflinie 92 eine exakte Schraubenlinie beschreibt. Dieser schraubenlinienförmige Verlauf der Kopflinie 92 geht schließlich aus dem abgewickelten Schnittbild der Fig. 5 noch deutlicher hervor. Nachdem eine Schraubenlinie durch Aufwickeln einer

0075209

geneigten Geraden auf einen Zylinder entsteht, erscheint die Kopflinie 92 in der Abwicklung wieder als Gerade.

Die Auswirkungen der Gehäuserippe 9 auf die Dampfströmung S werden anhand der Fig. 2 und 4 erläutert. Zunächst geht aus dem Querschnitt der Fig. 4 hervor, daß die durch den seitlichen Eintrittsstutzen 2 in das Ventilgehäuse 1 eintretende Dampfströmung S die zylindrische Ventilführung 7 anströmt bzw. teilweise umströmt. Dabei teilt sich die Dampfströmung S in bezug auf eine durch den Eintrittsstutzen 2 und die Längsachse L des Ventilgehäuses 1 gehende Symmetrieebene E in eine erste Teilströmung S1 und eine zweite Teilströmung S2 auf. Die durch ausgezogene Pfeile dargestellte erste Teilströmung S1 tritt dabei in denjenigen Bereich des zwischen Ventilgehäuse 1 und Ventilführung 7 gebildeten Ringraumes ein, in welchem keine Einbauten vorhanden sind. Die durch strichpunktierte Pfeile angedeutete zweite Teilströmung S2 tritt in denjenigen Bereich des zwischen Ventilgehäuse 1 und Ventilführung 7 gebildeten Ringraumes ein, in welchem die Gehäuserippe 9 angeordnet ist. Durch die in bezug auf die Symmetrieebene E asymmetrische Anordnung der Gehäuserippe 9 wird also die Ausbildung der ersten Teilströmung S1 gegenüber der zweiten Teilströmung S2 begünstigt und hierdurch ein Drall D erzeugt. In der Seitensansicht der Fig. 2 ist zu erkennen, daß dieser Drall D dann durch den schraubenlinienförmigen Verlauf der Gehäuserippe 9 verstärkt und homogenisiert wird. Die beiden Teilströmungen S1 und S2 werden dabei durch die Gehäuserippe 9 in den hinter dem Ventilsitz 4 liegenden Kanal geleitet, wobei sich der Drall D auch im Diffusor 5 fortsetzt und dort eine Ablösung der Strömung von der Diffusorwandung verhindert.

5 Patentansprüche
5 Figuren

0075209

Patentansprüche

1. Stellventil, insbesondere zur Steuerung und Regelung von Dampfturbinen mit einem seitlichen in ein Ventilgehäuse einmündenden Eintrittsstutzen, einem innerhalb des Ventilgehäuses in einer Ventilführung verschiebbaren Ventilkörper, einem in dem Ventilgehäuse angeordneten Ventilsitz und einem dem Ventilsitz nachgeschalteten Diffusor, wobei Ventilführung, Ventilkörper, Ventilsitz und Diffusor koaxial zu der Längsachse des Ventilgehäuses (1) angeordnet sind, d a d u r c h   g e k e n n z e i c h n e t, daß in dem Ringraum zwischen Ventilgehäuse (1) und Ventilführung (7) mindestens eine Strömungsleitschiene vorgesehen ist und daß die Strömungsleitschiene in bezug auf eine durch den Eintrittsstutzen (2) und die Längsachse (L) des Ventilgehäuses (1) gehende Symmetrieebene (E) einseitig versetzt angeordnet ist.

2. Stellventil nach Anspruch 1, d a d u r c h   g e - k e n n z e i c h n e t, daß die Strömungsleitschiene durch eine aus der Innenwandung des Ventilgehäuses (1) hervortretende Gehäuserippe (9) gebildet ist.

3. Stellventil nach Anspruch 1 oder 2, d a d u r c h   g e k e n n z e i c h n e t, daß die Strömungsleitschiene zur Längsachse (L) des Ventilgehäuses (1) geneigt ist.

4. Stellventil nach Anspruch 3, d a d u r c h   g e - k e n n z e i c h n e t, daß die inneren Endpunkte der Strömungsleitschiene auf einer um die Längsachse (L) des Ventilgehäuses (1) geführten Schraubenlinie liegen.

5. Stellventil nach Anspruch 4, d a d u r c h   g e - k e n n z e i c h n e t, daß die Schraubenlinie im Abstand zur Ventilführung (7) verläuft.

FIG 1

FIG 2

0075209

81 P 9369

FIG 3

FIG 4

FIG 5